# EUROPÄISCHE PATENTSCHRIFT

(11) **EP 3 069 056 B1**
(45) Veröffentlichungstag und Bekanntmachung des Hinweises auf die Patenterteilung: **10.01.2018**
(21) Anmeldenummer: 14789292.1
(22) Anmeldetag: 27.10.2014
(51) Int. Cl.: F16J 15/34

(54) **GLEITRINGDICHTUNGSANORDNUNG MIT VERBESSERTEM ABSTRÖMVERHALTEN EINES KÜHL- UND/ODER SPERRMEDIUMS**
SLIDE RING SEAL ARRANGEMENT WITH IMPROVED OUTFLOW BEHAVIOUR FOR A COOLING AND/OR BARRIER MEDIUM
ENSEMBLE D'ÉTANCHÉITÉ À ANNEAUX GLISSANTS À ÉCOULEMENT AMÉLIORÉ D'UN FLUIDE DE REFROIDISSEMENT ET/OU D'ARRÊT

(30) Priorität: 14.11.2013 DE 102013223226
(43) Veröffentlichungstag der Anmeldung: 21.09.2016
(73) Patentinhaber: EagleBurgmann Germany GmbH & Co. KG, 82515 Wolfratshausen (DE)
(72) Erfinder: FICHTNER, Josef, 82515 Wolfratshausen (DE); LEDIG, Stefan, 82515 Wolfratshausen (DE); MATUSCHEK, Alfred, 82538 Geretsried (DE); POCHMANN, Ernst, 82431 Kochel am See (DE); SKRZIDLO, Joachim, 82515 Wolfratshausen (DE)
(74) Vertreter: Hoefer & Partner Patentanwälte mbB
(86) Internationale Anmeldenummer: PCT/EP2014/072963
(87) Internationale Veröffentlichungsnummer: WO 2015/071077

(56) Entgegenhaltungen:
- EP-A1- 2 662 601
- DE-B3-102011 118 294
- DE-U1-202006 014 618

## Beschreibung

Die vorliegende Erfindung betrifft eine Gleitringdichtungsanordnung mit einem verbesserten Abströmverhalten eines zu den Gleitringen einer Gleitringdichtung zugeführten Mediums, insbesondere eines Kühl- und/oder Sperrmediums.

Gleitringdichtungsanordnungen sind aus dem Stand der Technik in unterschiedlichen Ausgestaltungen bekannt. Häufig werden Gleitringdichtungsanordnungen mit einem Kühl- und/oder Sperrmedium versorgt, welches mittels interner Fördereinrichtungen gefördert wird. Ein derartiges Beispiel ist aus der DE 10 2011 118 294.6 bekannt, wobei als interne Fördereinrichtung hier eine Tesla-Pumpe verwendet wird. Andere Fördereinrichtungen sind beispielsweise Pumpringe. Ein Fluidpfad verläuft dabei von der internen Fördereinrichtung zu den Gleitringen und wird von dort über eine Austrittsbohrung in einem Gehäuse abgeführt. Die Austrittsbohrung ist hierbei radial zu den Gleitringen vorgesehen. Das zur Gleitringdichtung zugeführte Fluid muss jedoch aufgrund der Rotation des rotierenden Gleitrings und der axialen Zuführung mehrere Richtungswechsel ausführen, wodurch Strömungsverluste im Fluid entstehen können. Hierdurch muss jedoch eine höhere Leistung durch die interne Fördereinrichtung aufgebracht werden. Insbesondere wird das Fluid im Bereich der Gleitringdichtung aufgrund des rotierenden Gleitrings in Umfangsrichtung beschleunigt und muss dann aber radial abgeführt werden. Weiterhin zeigt die DE 20 2006 014 618 U1 eine Gleitringdichtungsanordnung gemäß dem Oberbegriff des Anspruchs 1.

Es ist daher Aufgabe der vorliegenden Erfindung, eine Gleitringdichtungsanordnung bereitzustellen, welche bei einfachem Aufbau und einfacher, kostengünstiger Herstellbarkeit eine Reduzierung interner Verluste in einem zu den Gleitringen zugeführten Fluid ermöglicht.

Diese Aufgabe wird durch eine Gleitringdichtungsanordnung mit den Merkmalen des Anspruchs 1 gelöst. Die Unteransprüche zeigen bevorzugte Weiterbildungen der Erfindung.

Die erfindungsgemäße Gleitringdichtungsanordnung mit den Merkmalen des Anspruchs 1 weist demgegenüber den Vorteil auf, dass Strömungsverluste eines zu den Gleitringen einer Gleitringdichtung zugeführten Fluids, wie beispielsweise eines Sperrmediums oder eines Kühlmediums, signifikant reduziert sind. Hierbei wird eine verlustarme Strömung innerhalb der Gleitringdichtungsanordnung erreicht, wodurch insbesondere ein Massenstrom des zugeführten Fluids bei gleicher Antriebsleistung einer Fördereinrichtung vergrößert werden kann. Dadurch wird beispielsweise eine verbesserte Kühlwirkung an den Gleitringen ermöglicht, ohne dass dadurch eine Abmessung für eine Abströmbohrung in einem Gehäuse vergrößert werden müsste oder die Leistung einer internen Fördereinrichtung erhöht werden müsste. Erfindungsgemäß umfasst die Gleitringdichtungsanordnung neben der Gleitringdichtung mit einem rotierenden und einem stationären Gleitring ein Gehäusebauteil mit einem inneren zylindrischen Mantelbereich. Das Gehäusebauteil weist eine Auslassöffnung zum Abführen des zu dem Gleitring zugeführten Fluids sowie einen Einströmbereich auf. Der Einströmbereich ermöglicht erfindungsgemäß eine Reduzierung von Strömungsverlusten im Bereich des Eintritts der Auslassöffnung. Der Einströmbereich umfasst wenigstens einen in Umfangsrichtung verlaufenden, sich zur Auslassöffnung kontinuierlich vertiefenden Übergangskanal. Dieser Übergangskanal ist im Gehäusebauteil am inneren zylindrischen Mantelbereich gebildet und mündet in die Auslassöffnung. Die Gleitringdichtungsanordnung umfasst ferner einen zweiten, in Umfangsrichtung verlaufenden, sich zur Auslassöffnung kontinuierlich vertiefenden Übergangskanal, welcher an einer dem ersten Übergangskanal gegenüberliegenden Seite der Auslassöffnung angeordnet ist. Dadurch wird eine drehrichtungsunabhängige verbesserte Abfuhr eines zu dem Gleitring zugeführten Fluids ermöglicht. Die beiden Übergangskanäle liegen an der Auslassöffnung einander gegenüber, so dass unabhängig von der Drehrichtung jeweils eine verbesserte Einströmung in die Auslassöffnung erreicht wird. Besonders bevorzugt sind dabei der erste und zweite Übergangskanal symmetrisch zur Auslassöffnung angeordnet.

Besonders bevorzugt ist die Auslassöffnung in Radialrichtung außerhalb der Gleitringe angeordnet. Besonders bevorzugt liegt dabei die Auslassöffnung in Radialrichtung vollständig über dem rotierenden Gleitring oder über dem Dichtspalt. Hierdurch wird das durch den rotierenden Gleitring in Umfangsrichtung beschleunigte Fluid mit reduzierten Strömungsverlusten in den Übergangskanal und dann in die Auslassöffnung zugeführt.

Vorzugsweise umfasst die Gleitringdichtungsanordnung ferner eine interne Fördereinrichtung. Die interne Fördereinrichtung ist besonders bevorzugt ein Pumpring oder eine Tesla-Pumpe. Besonders bevorzugt liegt der Übergangskanal bzw. liegen die Übergangskanäle der Auslassöffnung dabei in Radialrichtung über der internen Fördereinrichtung. Hierdurch wird erreicht, dass das durch die interne Fördereinrichtung geförderte Fluid unmittelbar in die Übergangskanäle und somit die Auslassöffnung einströmen kann. Vorzugsweise ist die Auslassöffnung radial außerhalb über der internen Fördereinrichtung angeordnet. Weiter bevorzugt ist es möglich, dass auch zwei interne Fördereinrichtungen vorgesehen werden, welche hintereinander geschaltet sind, beispielsweise ein Pumpring und eine Tesla-Pumpe.

Weiter bevorzugt ist die Auslassöffnung in einem Winkel zur Radialrichtung der Gleitringe gerichtet und der Übergangskanal mündet in die somit zur Radialrichtung geneigte Auslassöffnung. Besonders bevorzugt umfasst die Auslassöffnung dabei einen zur Radialrichtung der Gleitringe geneigten Zulaufbereich sowie einen in Radialrichtung verlaufenden Hauptbereich, wobei bevorzugt die Zuströmung in den geneigten Zulaufbereich der Auslassöffnung erfolgt.

Weiter bevorzugt umfasst die Auslassöffnung einen ersten und zweiten Zulaufbereich, welche beide in einen gemeinsamen Hauptbereich münden. Der erste und zweite Zulaufbereich sind dabei symmetrisch zu einer Mittellinie des Hauptbereichs angeordnet. Diese Ausgestaltung ist ebenfalls besonders bevorzugt für eine drehrichtungsunabhängige Zuströmung von Fluid geeignet. Die beiden Zulaufbereiche sind vorzugsweise symmetrisch ausgebildet und jeder der Zulaufbereiche umfasst einen eigenen Übergangskanal.

Besonders bevorzugt ist der Übergangskanal derart gebildet, dass ein Boden des Übergangskanals in einer Ebene liegt. Hierdurch wird einerseits eine gute Zuströmung des Fluids zur Auslassöffnung erreicht und andererseits kann der Übergangskanal sehr einfach und kostengünstig, beispielsweise mittels eines spanabhebenden Verfahrens, hergestellt werden.

Für eine Strömungsverbesserung ist vorzugsweise ein Übergangsbereich zwischen dem Übergangskanal und der Auslassöffnung als bogenförmige Umlenkungskontur ausgebildet. Hierdurch kann ein sanfter Übergang vom Übergangskanal in die Auslassöffnung erreicht werden.

Weiter bevorzugt umfasst die Gleitringdichtungsanordnung genau eine Auslassöffnung. Hierdurch muss nur genau eine Auslassöffnung im Gehäusebauteil vorgesehen werden, so dass im Gehäusebauteil ausreichend Raum für weitere Bauelemente und Öffnungen, beispielsweise zur Befestigung des Gehäuses oder zusätzliche Fluidkanäle oder dergleichen, verbleibt.

Vorzugsweise umfasst die Auslassöffnung einen Hauptbereich und einen Zulaufbereich, wobei der Zulaufbereich in einem Winkel zum Hauptbereich angeordnet ist und Mittelachsen des Hauptbereichs und des Zulaufbereichs in einer gemeinsamen Ebene liegen, welche senkrecht zur Längsachse der Gleitringdichtungsanordnung ist. Alternativ kann der Zulaufbereich auch in axialer Richtung der Gleitringdichtungsanordnung geneigt zum radial verlaufenden Hauptbereich vorgesehen sein.

Nachfolgend werden bevorzugte Ausführungsbeispiele der Erfindung unter Bezugnahme auf die begleitende Zeichnung im Detail beschrieben. Gleiche bzw. funktional gleiche Bauteile sind in den Ausführungsbeispielen dabei mit den gleichen Bezugszeichen bezeichnet. In der Zeichnung ist:
- Fig. 1: eine schematische Ansicht einer Gleitringdichtungsanordnung gemäß einem Beispiel,
- Fig. 2: eine schematische Schnittansicht entlang der Linie II-II von Fig. 1,
- Fig. 3: eine schematische Schnittdarstellung einer Auslassöffnung einer Gleitringdichtungsanordnung gemäß einem ersten Ausführungsbeispiel der Erfindung,
- Fig. 4: eine schematische Schnittdarstellung einer Auslassöffnung einer Gleitringdichtungsanordnung gemäß einem zweiten Ausführungsbeispiel der Erfindung,
- Fig. 5: eine Gleitringdichtungsanordnung gemäß einem dritten Ausführungsbeispiel der Erfindung, und
- Fig. 6: eine Gleitringdichtungsanordnung gemäß einem vierten Ausführungsbeispiel der Erfindung.

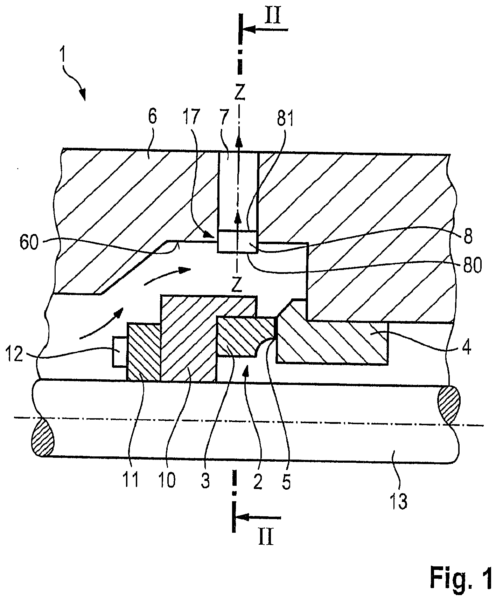

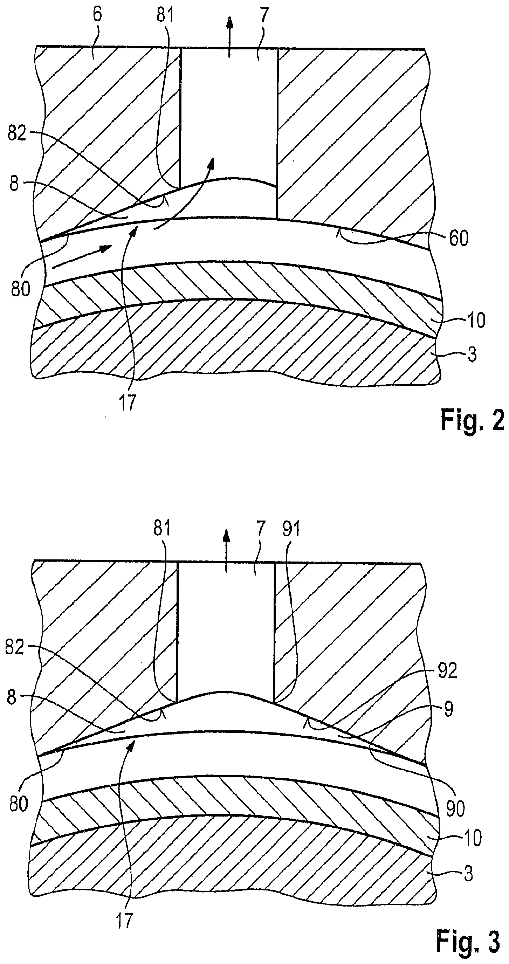

Nachfolgend wird unter Bezugnahme auf die Fig. 1 und 2 eine Gleitringdichtungsanordnung 1 gemäß einem Beispiel im Detail beschrieben.

Wie aus Fig. 1 ersichtlich ist, umfasst die Gleitringdichtungsanordnung 1 eine Gleitringdichtung 2 mit einem rotierenden Gleitring 3 und einem stationären Gleitring 4. Die beiden Gleitringe definieren zwischen sich einen Dichtspalt 5.

Der stationäre Gleitring 4 ist an einem Gehäusebauteil 6 fixiert.

Der rotierende Gleitring 3 ist über ein Mitnehmerelement 10 mit einer Welle 13 verbunden. Das Mitnehmerelement 10 überträgt dabei ein Drehmoment von der Welle 13 auf den rotierenden Gleitring 3.

Ferner ist an der Welle 13 eine interne Fördereinrichtung 11 mit Schaufeln 12 angeordnet. Die interne Fördereinrichtung 11 rotiert gemeinsam mit der Welle 13 und dient zur Förderung eines Fluids zur Gleitringdichtung 2. Das Fluid kann beispielsweise ein Sperrmedium sein oder ein Kühlfluid. Die Strömung des Fluids ist in den Fig. 1 und 2 durch Pfeile gekennzeichnet.

Im Gehäusebauteil 6 ist ferner eine Auslassöffnung 7 vorgesehen. Die Auslassöffnung 7 ist in Radialrichtung Z-Z der Gleitringe gerichtet und dient zum Abführen des Fluids. Am Gehäusebauteil 6 ist hierbei ein innerer zylindrischer Mantelbereich 60 gebildet. Hierbei geht die Auslassöffnung 7 vom inneren zylindrischen Mantelbereich 60 radial nach außen. Die Auslassöffnung 7 ist radial außerhalb über dem rotierenden Gleitring 3 vorgesehen.

Am inneren zylindrischen Mantelbereich 60 ist im Bereich der Auslassöffnung 7 ferner ein Einströmbereich 17 mit einem offenen Übergangskanal 8 ausgebildet. Der Übergangskanal 8 ist im Detail aus Fig. 2 ersichtlich. Der Übergangskanal 8 verläuft dabei in Umfangsrichtung und mündet in die Auslassöffnung 7. Der Übergangskanal 8 umfasst einen Eintrittsbereich 80 vom zylindrischen Mantelbereich 60 in den Übergangskanal 8 sowie einen Übergangsbereich 81 zur Auslassöffnung 7 (vergleiche Fig. 2). Ein Boden 82 des Übergangskanals 8 ist dabei eben gebildet. Der Übergangskanal 8 kann beispielsweise mittels eines spanabhebenden Verfahrens am inneren zylindrischen Mantelbereich 60 des Gehäusebauteils 6 hergestellt werden. Es sei angemerkt, dass der Boden 82 auch bogenförmig vorgesehen sein kann.

Der in Umfangsrichtung gerichtete Übergangskanal 8 ermöglicht somit eine bessere Einströmung des Fluids in die Auslassöffnung 7. Insbesondere ermöglicht der Übergangskanal 8 eine geleitete Einströmung des Fluids in die radiale Auslassöffnung 7, so dass Strömungsverluste reduziert werden können. Somit kann bei gleichem Durchmesser der Auslassöffnung 7 durch Vorsehen des Übergangskanals 8 im Vergleich mit einer Auslassöffnung, die keinen Übergangskanal 8 aufweist, eine signifikante Steigerung der Durchflussmenge erreicht werden. Somit kann mit einer gleichen internen Fördereinrichtung 11 eine Förderleistung erhöht werden oder es kann eine interne Fördereinrichtung 11 mit reduzierter Leitung vorgesehen werden, wodurch insbesondere auch ein Energieverbrauch der internen Fördereinrichtung 11 reduziert werden kann.

Somit kann bei sonst gleichen Abmessungen ein vergrößerter Volumenstrom des Fluids erreicht werden, so dass beispielsweise eine verbesserte Kühlung der Gleitringdichtung 2 erreicht werden kann. Weiterhin ist es möglich, dass im Gehäusebauteil 6 lediglich genau eine Auslassöffnung 7 vorgesehen wird, so dass der restliche Bauraum im Gehäusebauteil 6 anderweitig verwendet werden kann, beispielsweise zum Vorsehen von weiteren Fluidkanälen und/oder Befestigungselementen oder dergleichen.

Fig. 3 zeigt einen Ausschnitt einer Gleitringdichtungsanordnung gemäß einem ersten Ausführungsbeispiel der Erfindung. Im Unterschied zum vorher beschriebenen Beispiel ist die Gleitringdichtungsanordnung des ersten Ausführungsbeispiels rotationsunabhängig. Hierzu sind an der radialen Auslassöffnung 7 ein erster Übergangskanal 8 und ein zweiter Übergangskanal 9 vorgesehen. Die Übergangskanäle 8, 9 sind dabei symmetrisch an der Auslassöffnung 7 angeordnet.

Wie aus Fig. 3 ersichtlich ist, liegen die beiden Übergangskanäle 8, 9 an der Auslassöffnung 7 einander gegenüber und sind beide in Umfangsrichtung gerichtet. Somit kann unabhängig von einer Drehrichtung jeweils eine verbesserte Zuströmung zur radialen Auslassöffnung 7 erreicht werden. Beide Übergangskanäle 8, 9 münden dabei unmittelbar in der radialen Auslassöffnung 7. Der zweite Übergangskanal 9 umfasst ebenfalls einen ebenen Boden 92, einen Eintrittsbereich 90 vom inneren zylindrischen Mantelbereich 60 in den Übergangskanal 9 sowie einen Übergangsbereich 91 zur Auslassöffnung 7.

Somit kann unabhängig von der Drehrichtung der Gleitringdichtung beim ersten Ausführungsbeispiel eine verbesserte Anströmung der radialen Auslassbohrung 7 erhalten werden. Die beiden Übergangskanäle 8, 9 sind dabei symmetrisch zur Auslassöffnung 7 gebildet.

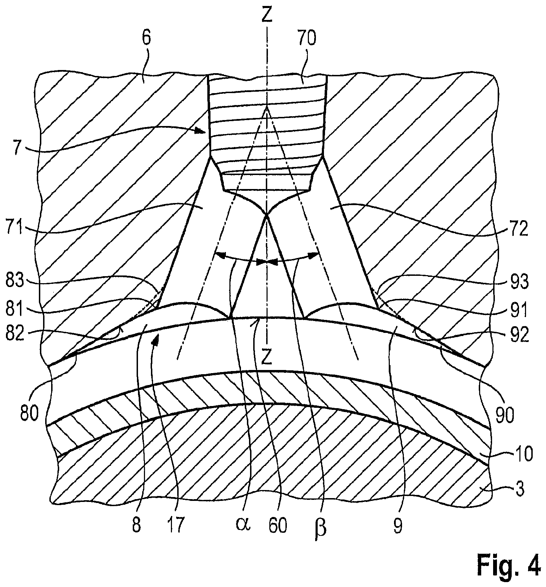

Fig. 4 zeigt einen Ausschnitt einer Gleitringdichtungsanordnung gemäß einem zweiten Ausführungsbeispiel der Erfindung. Beim zweiten Ausführungsbeispiel umfasst die Auslassöffnung 7 einen Hauptbereich 70, einen ersten Zulaufbereich 71 und einen zweiten Zulaufbereich 72. Der Hauptbereich 70 ist dabei radial zu den Gleitringen ausgerichtet. Der erste Zulaufbereich 71 ist hierbei in einem Winkel α zum Hauptbereich 70 angeordnet und der zweite Zulaufbereich 72 ist in einem Winkel β zum Hauptbereich 70 angeordnet. Dabei sind die beiden Winkel α und β gleich groß, weisen jedoch ein unterschiedliches Vorzeichen auf. Ferner ist ein erster Übergangskanal 8 und ein zweiter Übergangskanal 9 vorgesehen. Der erste Übergangskanal 8 mündet in den ersten Zulaufbereich 71 und der zweite Übergangskanal 9 mündet in den zweiten Zulaufbereich 72. Bei diesem Ausführungsbeispiel erfolgt somit ein Ausströmen des Fluids ebenfalls drehrichtungsabhängig. Allerdings tritt das Fluid nach Eintritt in den Übergangskanal zuerst in einen Zulaufbereich und dann in den Hauptbereich 70 ein. Hierdurch kann eine Durchflussmenge weiter gesteigert werden. Insbesondere kann durch die zur Radialrichtung Z-Z in Umfangsrichtung geneigte Ausgestaltung der Zulaufbereiche 71, 72 eine Reduzierung von Strömungsverlusten erreicht werden. Weiterhin sind die Durchmesser der Zulaufbereiche 71, 72 jeweils kleiner als ein Durchmesser des Hauptbereichs 70. Es sei angemerkt, dass es selbstverständlich auch möglich ist, eine Ausgestaltung mit einem Hauptbereich 70 und einem der Zulaufbereiche nur in eine Umfangsrichtung, ausgehend von Hauptbereich 70, vorzusehen.

In Fig. 4 ist in gestrichelten Linien noch eine weitere alternative Ausgestaltung der Erfindung eingezeichnet, wobei bogenförmige Umlenkungskonturen 83, 93 am Übergangsbereich 81 bzw. 91 gebildet sind. Die bogenförmigen Übergangskonturen 83, 93 stellen einen möglichst strömungsgünstigen Übergang vom Übergangskanal 8, 9 zu den jeweiligen Zulaufbereichen 71, 72 bereit. Ein Bogen der Umlenkungskonturen 83, 93 ist dabei vorzugsweise derart gewählt, dass keine störende Übergangskante zwischen den Umlenkungskonturen 83, 93 und den an diese angrenzende Bereiche vorhanden ist.

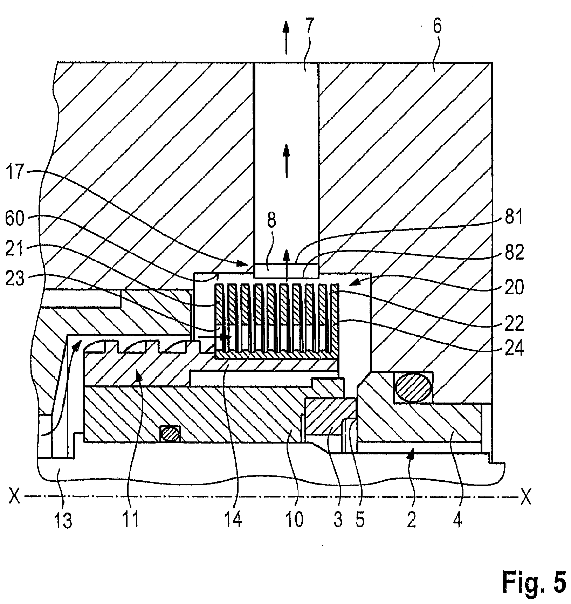

Fig. 5 zeigt eine Gleitringdichtungsanordnung gemäß einem dritten Ausführungsbeispiel der Erfindung. Die Gleitringdichtungsanordnung gemäß dem dritten Ausführungsbeispiel umfasst eine erste interne Fördereinrichtung 11 in Form eines Pumprings sowie eine zweite interne Fördereinrichtung in Form einer Tesla-Pumpe 20. Wie aus Fig. 5 ersichtlich ist, sind dabei der Pumpring und die Tesla-Pumpe 20 auf einer gemeinsamen Hülse 14 angeordnet, welche mit dem Mitnehmerelement 10 verbunden ist. Die Tesla-Pumpe 20 umfasst eine Vielzahl von parallelen Scheiben 21, welche jeweils eine Axialöffnung 23 aufweisen. Die Axialöffnungen 23 sind dabei zylindrisch und gleich verteilt entlang des Umfangs der Scheiben 21 angeordnet. Zwischen den einzelnen Scheiben 21 sind jeweils Zwischenräume 22 vorgesehen. Weiterhin ist eine axiale Endscheibe 24 der Tesla-Pumpe 20 vorgesehen, welche keine Durchlassöffnung aufweist. Wie durch die Pfeile in Fig. 5 angedeutet, wird somit das Fluid zuerst durch die erste interne Fördereinrichtung 11 (Pumpring) zur Tesla-Pumpe 20 gefördert und dort in die Durchlassöffnungen 23. Das Fluid verlässt dann die Tesla-Pumpe 20 mit verstärkter radialer Komponente und wird dann über den Übergangskanal 8 in die Auslassöffnung 7, welche in Radialrichtung der Gleitringe ausgerichtet ist, abgeführt. Hierbei ist am Eintrittsbereich der Auslassöffnung 7 wiederum ein Einströmbereich 17 mit einem Übergangskanal 8 entsprechend dem ersten Ausführungsbeispiel ausgebildet. Durch den Übergangskanal 8 wird bei diesem Ausführungsbeispiel eine noch bessere Abströmung durch die Auslassöffnung 7 erreicht. Ein Abstand zwischen einer radial äußeren Umfangsfläche der Tesla-Pumpe 20 und einem inneren zylindrischen Mantelbereich 60 des Gehäusebauteils 6 kann dabei relativ klein sein, so dass eine sehr kompakte Bauform erhalten wird. Die Auslassöffnung 7 ist dabei radial außerhalb über der Tesla-Pumpe 20 angeordnet, vorzugsweise in Axialrichtung in der Mitte der Tesla-Pumpe 20.

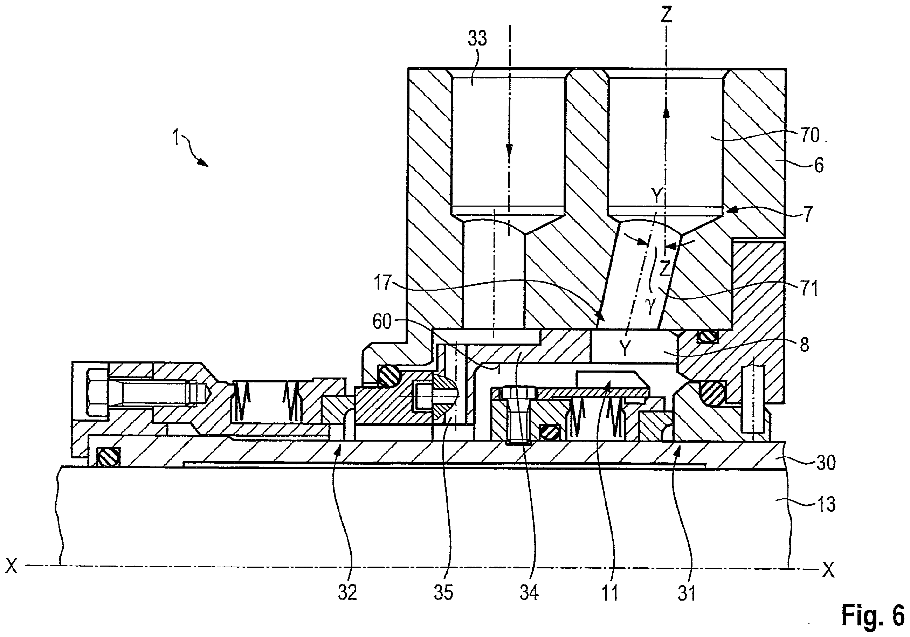

Das in Fig. 6 gezeigte vierte Ausführungsbeispiel zeigt eine Gleitringdichtungsanordnung in Tandemanordnung mit einer ersten Gleitringdichtung 31 und einer zweiten Gleitringdichtung 32. Das Bezugszeichen 30 bezeichnet eine mit der Welle 13 mitdrehende Hülse. In diesem Ausführungsbeispiel wird ein Sperrfluid über einen Zulauf 33 und über eine Durchgangsöffnung 35, welche in einem Hülsenbauteil 34 vorgesehen ist, zugeführt. Zur Förderung des Sperrfluids innerhalb der Gleitringdichtungsanordnung ist eine interne Fördereinrichtung 11 in Form eines Pumprings vorgesehen. Die Auslassöffnung 7 ist ähnlich wie beim dritten Ausführungsbeispiel von Fig. 4 mit einem ersten Zulaufbereich 71 mit einem ersten Übergangskanal 8 und einem nicht gezeigten zweiten Zulaufbereich mit einem zweiten Übergangskanal gebildet, welcher in der Schnittansicht von Fig. 6 nicht ersichtlich ist. Ein Hauptbereich 70 der Auslassöffnung 7 ist in radialer Richtung Z-Z senkrecht zur Welle 13 angeordnet. Eine Mittellinie Y-Y des ersten Zulaufbereichs 71 und des zweiten Zulaufbereichs ist dabei in einem Winkel γ zur radialen Richtung Z-Z angeordnet. Dadurch sind die Zulaufbereiche 7' geneigt zur Axialrichtung X-X vorgesehen, wodurch das Strömungsverhalten weiter verbessert werden kann und insbesondere ein Strömungsverlust im Bereich des Eintritts der Auslassöffnung 7 reduziert werden kann. Der Übergangskanal 8 ist dabei im Hülsenbauteil 34 vorgesehen. Es sei angemerkt, dass jedoch auch auf das Hülsenbauteil 34 verzichtet werden kann und der Übergangskanal 8 im Gehäusebauteil 6 vorgesehen werden kann. Bei diesem Ausführungsbeispiel sind die Zulaufbereiche somit sowohl in Umfangsrichtung als auch in Axialrichtung X-X geneigt. Alternativ kann der Hauptbereich 70 der Auslassöffnung 7 auch in einem Winkel ungleich 90° zur Axialrichtung X-X vorgesehen sein.

Zu allen Ausführungsbeispielen sei angemerkt, dass erfindungsgemäss somit durch Vorsehen eines oder mehrerer Einströmbereiche 17 mit Übergangskanälen 8, 9 in einem zylindrischen Mantelbereich 60 eine signifikant bessere Abströmung von Fluid von den Gleitringen in eine Auslassöffnung 7 erreicht werden kann. Insbesondere kann ein ausreichender Massenstrom des Fluids durch Bereitstellen von nur einer einzigen Auslassöffnung 7 erreicht werden. Hierdurch kann insbesondere eine Gehäusestruktur des Gehäusebauteils 6 deutlich vereinfacht werden.

### Bezugszeichenliste

- 1: Gleitringdichtungsanordnung
- 2: Gleitringdichtung
- 3: Rotierender Gleitring
- 4: Stationärer Gleitring
- 5: Dichtspalt
- 6: Gehäusebauteil
- 7: Auslassöffnung
- 8: Erster Übergangskanal
- 9: Zweiter Übergangskanal
- 10: Mitnehmerelement
- 11: Erste interne Fördereinrichtung
- 12: Schaufel
- 13: Welle
- 14: Hülse
- 17: Einströmbereich
- 20: Tesla-Pumpe (zweite interne Fördereinrichtung)
- 21: Scheibe
- 22: Zwischenraum
- 23: Durchtrittsöffnung
- 24: Geschlossene Endscheibe
- 30: Hülse
- 31: erste Gleitringdichtung
- 32: zweite Gleitringdichtung
- 33: Zulauf
- 34: Hülsenbauteil
- 35: Durchgangsöffnung
- 60: Innerer zylindrischer Mantelbereich
- 70: Hauptbereich
- 71: Erster Zulaufbereich
- 72: Zweiter Zulaufbereich
- 80: Eintrittsbereich
- 81: Übergangsbereich
- 82: Boden
- 83: bogenförmige Umlenkungskontur
- 90: Eintrittsbereich
- 91: Übergangsbereich
- 92: Boden
- 93: bogenförmige Umlenkungskontur

## Patentansprüche

1. Gleitringdichtungsanordnung, umfassend:
- eine Gleitringdichtung (2) mit einem rotierenden Gleitring (3) und einem stationären Gleitring (4), welche zwischen sich einen Dichtspalt (5) definieren, und
- ein Gehäusebauteil (6) mit einem inneren Mantelbereich (60),
- wobei das Gehäusebauteil (6) eine Auslassöffnung (7) zum Abführen eines zu den Gleitringen geführten Fluids und einen Einströmbereich (17) umfasst, und
- wobei der Einströmbereich (17) wenigstens einen in Umfangsrichtung verlaufenden, sich zur Auslassöffnung (7) kontinuierlich vertiefenden, ersten Übergangskanal (8; 9) aufweist, welcher im Gehäusebauteil (6) gebildet ist und an der Auslassöffnung (7) mündet,
**gekennzeichnet durch**
- einen zweiten Übergangskanal (9), welcher an der Auslassöffnung (7) gegenüber dem ersten Übergangskanal (8) angeordnet ist.

2. Anordnung nach Anspruch 1, **dadurch gekennzeichnet, dass** die Auslassöffnung (7) radial außerhalb über den Gleitringen angeordnet ist.

3. Anordnung nach einem der vorhergehenden Ansprüche, ferner umfassend wenigstens eine erste interne Fördereinrichtung (11) zur Förderung des Fluids.

4. Anordnung nach Anspruch 3, **dadurch gekennzeichnet, dass** die Auslassöffnung (7) radial außerhalb über der Fördereinrichtung angeordnet ist.

5. Anordnung nach Anspruch 3 oder 4, umfassend eine erste interne Fördereinrichtung (11) und eine zweite interne Fördereinrichtung (20).

6. Anordnung nach einem der vorhergehenden Ansprüche, **dadurch gekennzeichnet, dass** die Auslassöffnung (7) ausschließlich in Radialrichtung verläuft.

7. Anordnung nach einem der Ansprüche 1 bis 5, **dadurch gekennzeichnet, dass** die Auslassöffnung (7) einen in Radialrichtung verlaufenden Hauptbereich (70) und einen in einen Winkel (α) zur Radialrichtung verlaufenden Zulaufbereich (71) aufweist, wobei der Zulaufbereich (71) in den Hauptbereich (70) mündet.

8. Anordnung nach Anspruch 1, **dadurch gekennzeichnet, dass** der erste Übergangskanal (8) und der zweite Übergangskanal (9) symmetrisch zur Auslassöffnung (7) ausgebildet sind.

9. Anordnung nach einem der vorhergehenden Ansprüche, **dadurch gekennzeichnet, dass** die Auslassöffnung (7) einen ersten Zulaufbereich (71) und einen zweiten Zulaufbereich (72) aufweist, welche beide in einen gemeinsamen Hauptbereich (70) münden, wobei der erste und zweite Zulaufbereich (70, 71) symmetrisch zum Hauptbereich (70) vorgesehen sind.

10. Anordnung nach einem der vorhergehenden Ansprüche, **dadurch gekennzeichnet, dass** der Übergangskanal (8; 9) einen Boden (82; 92) umfasst, welcher in einer Ebene liegt.

11. Anordnung nach einem der vorhergehenden Ansprüche, **dadurch gekennzeichnet, dass** ein Übergangsbereich zwischen dem Übergangskanal (8, 9) und der Auslassöffnung (7) als bogenförmige Umlenkungskontur (83, 93) ausgebildet ist.

12. Anordnung nach einem der Ansprüche 7 bis 11, **dadurch gekennzeichnet, dass** eine Mittelachse (Y-Y) des Zulaufbereichs (71) und eine Mittelachse (Z-Z) des Hauptbereichs (70) in einer gemeinsamen Ebene liegen, wobei die Ebene senkrecht zu einer Längsachse (X-X) der Gleitringdichtungsanordnung ist.

13. Anordnung nach einem der Ansprüche 7 bis 11, **dadurch gekennzeichnet, dass** eine Mittelachse (Y-Y) des Zulaufbereichs (71) in Axialrichtung (X-X) und/oder in Umfangsrichtung geneigt ist und eine Ebene, in welcher die Mittelachse (Z-Z) des Hauptbereichs (70) liegt, in einem Winkel (γ) schneidet.

## Claims

1. Mechanical seal arrangement, comprising:
- a mechanical seal (2) having a rotating slide ring (3) and a stationary slide ring (4) which delimit a sealing gap (5) therebetween, and
- a housing component (6) having an inner peripheral portion (60),
- wherein the housing component (6) comprises an outlet opening (7) for discharging a fluid guided to the slide rings and an inflow portion (17), and
- wherein the inflow portion (17) includes at least one first transition channel (8; 9) which extends in a circumferential direction, continuously recesses towards the outlet opening (7), is formed in the housing component (6) and opens at the outlet opening (7),
**characterized by**
- a second transition channel (9) arranged at the outlet opening (7) opposite to the first transition channel (8).

2. Arrangement according to claim 1, **characterized in that** the outlet opening (7) is arranged radially outside and above the slide rings.

3. Arrangement according to any one of the preceding claims, further comprising at least one internal conveying device (11) for conveying the fluid.

4. Arrangement according to claim 3, **characterized in that** the outlet opening (7) is arranged radially outside and above the conveying device.

5. Arrangement according to claim 3 or 4, comprising a first internal conveying device (11) and a second internal conveying device (20).

6. Arrangement according to any one of the preceding claims, **characterized in that** the outlet opening (7) extends exclusively in a radial direction.

7. Arrangement according to any one of claims 1 to 5, **characterized in that** the outlet opening (7) includes a main portion (70) extending in a radial direction and an intake portion (71) extending at an angle (α) to the radial direction, wherein the intake portion (71) opens into the main portion (70).

8. Arrangement according to claim 1, **characterized in that** the first transition channel (8) and the second transition channel (9) are formed symmetrically with respect to the outlet opening (7).

9. Arrangement according to any one of the preceding claims, **characterized in that** the outlet opening (7) includes a first intake portion (71) and a second intake portion (72), which open both into a common main portion (70), wherein the first and second intake portion (70, 71) are provided symmetrically with respect to the main portion (70).

10. Arrangement according to any one of the preceding claims, **characterized in that** the transition channel (8; 9) comprises a base (82; 92) which lies in a plane.

11. Arrangement according to any one of the preceding claims, **characterized in that** a transition portion between the transition channel (8, 9) and the outlet opening (7) is formed as an arcuate deflection contour (83, 93).

12. Arrangement according to any one of claims 7 to 11, **characterized in that** a centre axis (Y-Y) of the intake portion (71) and a centre axis (Z-Z) of the main portion (70) lie in a common plane, wherein the plane is perpendicular to a longitudinal axis (X-X) of the mechanical seal arrangement.

13. Arrangement according to any one of claims 7 to 11, **characterized in that** a centre axis (Y-Y) of the intake region (71) is inclined in axial direction (X-X) and/or in circumferential direction and intersects a plane in which the centre axis (Z-Z) of the main portion (70) lies, at an angle (γ).

## Revendications

1. Ensemble d'étanchéité à anneaux glissants, comprenant :
- une garniture d'étanchéité à anneaux glissants (2) avec un anneau glissant rotatif (3) et un anneau glissant fixe (4), lesquels définissent entre eux une fente d'étanchéité (5), et
- un élément de boîtier (6) avec une zone d'enveloppe intérieure (60),
- dans lequel l'élément de boîtier (6) comprend un orifice de sortie (7) pour l'évacuation d'un fluide amené aux anneaux glissants et une zone d'entrée (17), et
- dans lequel la zone d'entrée (17) présente au moins un premier conduit de passage (8 ; 9) qui s'étend dans la direction périphérique, qui pénètre continûment jusqu'à l'orifice de sortie (7), qui est formé dans l'élément de boîtier (6) et qui débouche au niveau de l'orifice de sortie (7),
**caractérisé par**
- un deuxième conduit de passage (9), qui est agencé au niveau de l'orifice de sortie (7) face au premier conduit de passage (8).

2. Ensemble selon la revendication 1, **caractérisé en ce que** l'orifice de sortie (7) est agencé radialement à l'extérieur au-dessus des anneaux glissants.

3. Ensemble selon l'une quelconque des revendications précédentes, comprenant en outre au moins un premier dispositif de transport interne (11) pour le transport du fluide.

4. Ensemble selon la revendication 3, **caractérisé en ce que** l'orifice de sortie (7) est agencé radialement à l'extérieur au-dessus du dispositif de transport.

5. Ensemble selon la revendication 3 ou 4, comprenant un premier dispositif de transport interne (11) et un deuxième dispositif de transport interne (20).

6. Ensemble selon l'une quelconque des revendications précédentes, **caractérisé en ce que** l'orifice de sortie (7) s'étend exclusivement dans la direction radiale.

7. Ensemble selon l'une quelconque des revendications 1 à 5, **caractérisé en ce que** l'orifice de sortie (7) présente une zone principale (70) s'étendant dans la direction radiale et une zone d'arrivée (71) s'étendant selon un angle (α) par rapport à la direction radiale, dans lequel la zone d'arrivée (71) débouche dans la zone principale (70).

8. Ensemble selon la revendication 1, **caractérisé en ce que** le premier conduit de passage (8) et le deuxième conduit de passage (9) sont réalisés symétriquement à l'orifice de sortie (7).

9. Ensemble selon l'une quelconque des revendications précédentes, **caractérisé en ce que** l'orifice de sortie (7) présente une première zone d'arrivée (71) et une deuxième zone d'arrivée (72), les deux débouchant dans une zone principale commune (70), dans lequel la première et deuxième zone d'arrivée (70, 71) sont prévues symétriquement à la zone principale (70).

10. Ensemble selon l'une quelconque des revendications précédentes, **caractérisé en ce que** le conduit de passage (8 ; 9) comprend un fond (82 ; 92), qui se situe dans un plan.

11. Ensemble selon l'une quelconque des revendications précédentes, **caractérisé en ce qu'**une zone de passage entre le conduit de passage (8, 9) et l'orifice de sortie (7) est réalisée en tant que contour de déviation en arc (83, 93).

12. Ensemble selon l'une quelconque des revendications 7 à 11, **caractérisé en ce qu'**un axe médian (Y-Y) de la zone d'arrivée (71) et un axe médian (Z-Z) de la zone principale (70) se trouvent dans un plan commun, dans lequel le plan est perpendiculaire à un axe longitudinal (X-X) de l'ensemble d'étanchéité à anneaux glissants.

13. Ensemble selon l'une quelconque des revendications 7 à 11, **caractérisé en ce qu'**un axe médian (Y-Y) de la zone d'arrivée (71) est incliné dans la direction axiale (X-X) et/ou dans la direction périphérique et coupe un plan, dans lequel se trouve l'axe médian (Z-Z) de la zone principale (70), selon un angle (γ).
